# EUROPÄISCHE PATENTSCHRIFT

(11) **EP 1 405 147 B1**
(45) Veröffentlichungstag und Bekanntmachung des Hinweises auf die Patenterteilung: **28.10.2009**
(21) Anmeldenummer: 02754321.4
(22) Anmeldetag: 05.07.2002
(51) Int. Cl.: G05B 23/02, G05B 21/02

(54) **ÜBERWACHUNG EINES MESSSIGNALS, INSBESONDERE IN DER AUTOMATISIERUNGSTECHNIK**
MONITORING OF A MEASURING SIGNAL, IN PARTICULAR IN AUTOMATION TECHNOLOGY
SURVEILLANCE D'UN SIGNAL DE MESURE, EN PARTICULIER DANS LA TECHNIQUE D'AUTOMATISATION

(30) Priorität: 12.07.2001 DE 10134013
(43) Veröffentlichungstag der Anmeldung: 07.04.2004
(73) Patentinhaber: SIEMENS AKTIENGESELLSCHAFT, 80333 München (DE)
(72) Erfinder: VÖLKEL, Thomas, 95138 Bad Steben (DE)
(86) Internationale Anmeldenummer: PCT/DE2002/002477
(87) Internationale Veröffentlichungsnummer: WO 2003/007099

(56) Entgegenhaltungen:
- EP-A- 0 810 556
- US-A- 4 908 746
- US-A- 5 177 695
- US-A- 5 768 119
- US-A- 5 978 746

## Beschreibung

Die Erfindung betrifft ein Verfahren zur Überwachung von mindestens einem Messsignal, insbesondere zur Anwendung in der Automatisierungstechnik, in der Fertigungsautomatisierung sowie in der Prozessautomatisierung.

In der Industrie werden Anlagenteile wie zum Beispiel Lager, Getriebe und Motoren häufig im Rahmen der Wartung und Instandhaltung mit Sensoren überwacht. Die Überwachung soll z. B. anzeigen in welchem Zustand sich das Anlagenteil befindet oder soll Störungen/Defekte vorhersagen, um Anlagenstillstände zu vermeiden oder Reparaturarbeiten rechtzeitig einplanen zu können. Für die Überwachung werden die von den Sensoren gelieferten Signale zyklisch oder kontinuierlich ausgewertet. Es ist nicht immer möglich im Vorfeld festzulegen in welchen zeitlichen Abständen das jeweilige Messsignal eines Sensors ausgewertet werden muss.

Aus US 5 177 695 ist eine Vorrichtung sowie ein Verfahren zur Leistungsregelung bekannt. Dabei werden Charakteristiken einer Übertragungsfunktion eines Systems zur Leistungsregelung dynamisch angepasst, wobei eine Abtastrate von Ausgangswerten der Leistungsregelung variabel ist. Wird eine operativ unkritische Veränderung eines Ausgangswerts im Vergleich zum vorhergehenden Ausgangswert festgestellt, so wird die Abtastrate verringert.

Der Erfindung liegt die Aufgabe zugrunde, die automatische Überwachung von Messsignalen zu verbessern.

Diese Aufgabe wird gelöst durch ein Verfahren zur Überwachung von mindestens einem Messsignal, insbesondere zur Anwendung in der Automatisierungstechnik, bei welchem Verfahren ein Rechnersystem in Messperioden, welche einen zeitlichen Abstand voneinander aufweisen, zyklisch einen Kennwert des Messsignals bestimmt, wobei automatisch
- eine Festlegung einer Priorität erfolgt,
- die Priorität dem Messsignal zugewiesen wird und
- der zeitliche Abstand zwischen den Messperioden in Abhängigkeit der Priorität festgelegt wird.

Die Überwachung von Anlagenteilen erfolgt bisher meist zyklisch in festgelegten und nicht automatisch veränderbaren Zeitintervallen. Diese bisher verwendete Methode beinhaltet die Gefahr, dass zwischen zwei Messperioden innerhalb des Zeitintervalls ohne Messung ein Ereignis auftritt, das bis zum Beginn der nächsten Messperiode schon zu einem Anlagenausfall führen kann, falls der zeitliche Abstand zwischen den Messperioden zu groß gewählt wurde. Für die kontinuierliche Überwachung wird meist aufgrund der hohen Datenmengen (Schwingungssignale, Bildsignale u. a.) eine hohe Rechenleistung und somit teure Hardware benötigt, die gängige Rechnersysteme (z. B. ein Standard-PC) bei der Anzahl von Messstellen in komplexen Anlagen nicht bewältigen können. Deshalb wird nur in wenigen Fällen die Überwachung kontinuierlich durchgeführt. Um auch größere Anlagen mit mehreren Messstellen mit gängiger Rechnerhardware überwachen zu können, wird vorgeschlagen, jeder Messstelle eine Priorität zuzuweisen. Die Priorität legt fest in welchen zeitlichen Abständen die Signale der Messstelle ausgewertet werden. Bei niedrigster Priorität wird das Signal z. B. nur alle hundertachtzig Minuten und bei höchster Priorität kontinuierlich ausgewertet. Die Abstufung zwischen den zeitlichen Abständen der Messperioden ist einstellbar. Die Festlegung der Priorität erfolgt dynamisch und automatisch aus den Kennwerten der Signale. Die Priorisierung kann anhand von konkreten Schwellwerten der Kennwerte, Änderungen vom vorletzten zum letzten Kennwert oder aus dem Trend des Kennwertverlaufs und einer Kombination aus letzteren erfolgen. Die Festlegung der Schwellwerte sowie die maximale Änderung vom Kennwert i-1 zu Kennwert i als auch Kriterien aus dem Gesamttrend können eingestellt werden.

Der zeitliche Abstand zwischen den Messperioden eines Messsignals wird vorteilhafterweise verringert, wenn dem Messsignal eine höhere Priorität zugeordnet wird. Die automatische Festlegung der Prioritäten und der zeitlichen Abstände ermöglicht eine optimierte Nutzung der zur Verfügung stehenden Übertragungs- und Rechnerkapazitäten. Momentan als unkritisch bewertete Messsignale werden beim erfindungsgemäßen System und Verfahren nur relativ selten ausgewertet und belasten somit die zur Verfügung stehenden Übertragungs- und Rechnerkapazitäten nur minimal. Erst dann, wenn sich solch ein zuvor als unkritisch bewertetes Signal auffällig verändert, wird es genauer überwacht, d. h. häufiger gemessen und ausgewertet. Die zeitlichen Abstände werden verkleinert, so dass ein Ausfall oder eine Störung, die sich durch das sich verändernde Messsignal ankündigen, rechtzeitig erkannt und angezeigt werden kann.

Bei einem Messsignal, welches sich nur relativ langsam in kleinen Schritten ändert erfolgt die automatische Festlegung der Priorität vorteilhafterweise in Abhängigkeit vom Kennwert des Messsignals. Dazu werden ein oder mehrere Schwellwerte und somit Wertebereiche und diesen zugeordnete Prioritätsstufen definiert. In Abhängigkeit des Wertebereichs in welchem sich ein aktueller Kennwert des Messsignals befindet kann dann vom Rechnersystem automatisch die zugehörige Priorität bestimmt werden.

Besonders für Messsignale, bei denen plötzliche stärkere Schwankungen eine genauere Überwachung erforderlich machen, wird vorgeschlagen, dass die Festlegung der Priorität automatisch in Abhängigkeit der Größe der Differenz der in zwei aufeinanderfolgenden Messperioden bestimmten Kennwerte des Messsignals erfolgt. Ab einer zuvor festgelegten Größe der Differenz wird dem Messsignal vom Rechnersystem eine höhere Priorität zugeordnet und somit eine Verringerung des zeitlichen Abstands der Messperioden festgelegt.

Zur Überwachung von Messsignalen, die komplexe Verläufe zeigen, wird vorgeschlagen, dass die Festlegung der Priorität automatisch in Abhängigkeit einer vom Rechnersystem durchgeführten Trendbetrachtung der in aufeinanderfolgenden Messperioden bestimmten Kennwerte des Messsignals erfolgt. Diese Trendbetrachtung kann in einer Kombination der oben genannten Betrachtungen der Wertebereiche bzw. der Wertedifferenzen bestehen. Aber auch Trendbetrachtungen mittels Verknüpfung mehrerer Signale, mittels Vergleich der Kennwerte mit Werten aus in einem Speicher des Rechnersystems hinterlegten Tabellen bis hin zu Trendbetrachtungen mit Hilfe von Fuzzy-Logik sind möglich.

Die Festlegung und Zuweisung der Priorität sowie die darauf gründende Festlegung der zeitlichen Abstände kann zeitlich eng verknüpft mit der Auswertung der Messsignale erfolgen, da die genannten Vorgänge automatisch durchgeführt werden, zeitlich nur abhängig von der verfügbaren Rechenleistung.

Im Folgenden wird die Erfindung anhand der in den Figuren dargestellten Ausführungsbeispiele näher beschrieben und erläutert.

Es zeigen:
- FIG 1: eine Zuordnungstabelle für die Festlegung der Zuordnung zwischen Priorität und zeitlichem Abstand der Messperi- oden
- FIG 2: einen Verlauf des Kennwerts eines Messsignals mit ver- schiedenen zeitlichen Abständen der Messperioden und
- FIG 3: einen Antriebsstrang mit Messstellen.

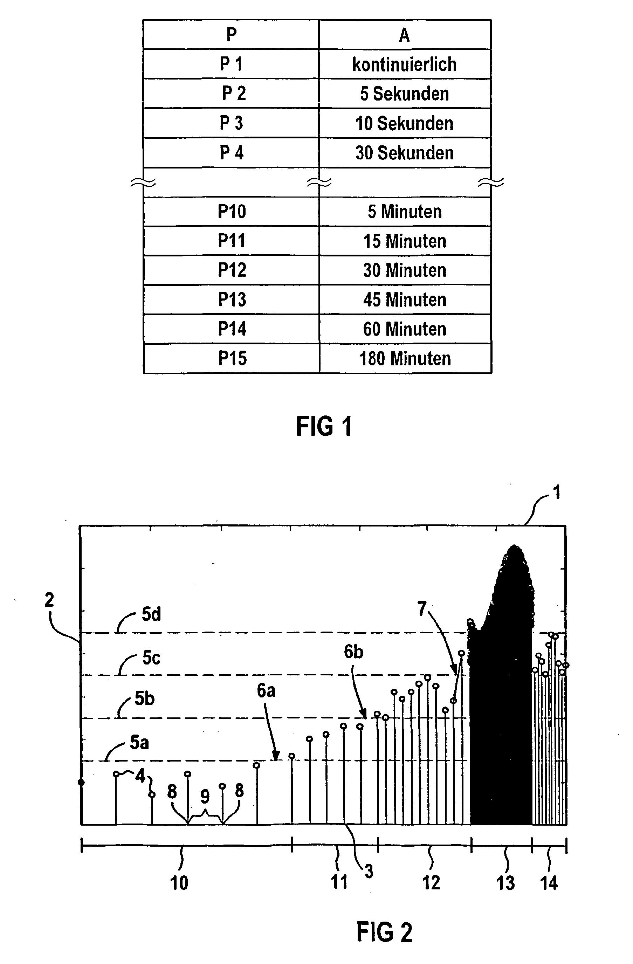

FIG 1 zeigt ein Beispiel einer Zuordnungstabelle zur Verwendung in einem Verfahren zur Überwachung eines Messsignals. Die Tabelle enthält zwei Spalten P, A, wobei in der ersten Spalte P die Prioritäten P1...P15 aufgeführt sind und in der zweiten Spalte A die diesen Prioritäten P1...P15 zugeordneten zeitlichen Abstände der Messperioden aufgeführt sind. Die dargestellte Zuordnungstabelle enthält fünfzehn verschiedene Prioritäten P1 ..P15. Der höchsten Priorität P1 ist ein zeitlicher Abstand "kontinuierlich" zugeordnet. Ein Messsignal, welchem diese Priorität P1 zugeordnet würde, würde also kontinuierlich oder mit der höchstmöglichen Abtastrate ausgewertet bzw. abgetastet werden. Messsignale, denen eine geringere Priorität P1...P15 zugewiesen wird, werden seltener ausgewertet. Im Beispiel wird ein Messsignal der Priorität P2 alle fünf Sekunden, ein Messsignal der Priorität P4 alle dreißig Sekunden und schließlich ein Messsignal der Priorität P15 nur noch alle hundertachtzig Minuten ausgewertet. Die Anzahl und die Bezeichnung der Prioritätsstufen ebenso wie die diesen zugeordneten zeitlichen Abstände der Messperioden sind selbstverständlich in konkreten Anwendungsfällen frei wählbar. Jedem Messsignal kann eine eigene Zuordnungstabelle, welche auf dieses Messsignal abgestimmt ist, zugeordnet sein. Gleichartigen Messsignalen kann jedoch auch die selbe Zuordnungstabelle zugeordnet sein.

FIG 2 zeigt ein Beispiel eines Verlaufs des Kennwerts des Messsignals. Auf der senkrechten Achse 2 ist der Kennwert des Messsignals aufgetragen, auf der waagerechten Achse 3 die Zeit. Die in dem Diagramm 1 aufgetragenen Kennwerte des Messsignals sind mit dem Bezugszeichen 4 gekennzeichnet. Die gestrichelten waagerechten Linien im Diagramm 1 kennzeichnen Schwellwerte 5a bis 5d. Markante Stellen im Kennwerteverlauf sind mit den Bezugszeichen 6a, 6b und 7 gekennzeichnet. Unterhalb der waagerechten Achse 3 sind fünf Zeitabschnitte 10 bis 14 angegeben, während derer die Priorität P1...P15 jeweils konstant ist. Der Kennwert 4 des Messsignals wird in Messperioden 8 bestimmt, welche einen zeitlichen Abstand 9 voneinander aufweisen. Die Länge einer solchen Messperiode 8 hängt vom auszuwertenden Messsignal ab. Bei Wechselgrößen als zu überwachendem Messsignal wird die Messperiode zumindest in der Größenordnung der Periodendauer liegen, um eine Kennwertbestimmung zu ermöglichen. Ein Kennwert ist z. B. der Effektivwert, der Scheitelwert oder ein aus der Messung der Augenblickswerte des Messsignals in anderer Form rechnerisch ermittelter Wert. Bei Gleichgrößen als Messsignal kann sich die Länge der Messneriode bis auf einen diskreten Abtastzeitpunkt verkürzen, während dessen ein Momentanwert des Messsignals gemessen bzw. abgetastet wird und als Kennwert dient.

Im Folgenden werden Merkmale des Verfahrens zur Überwachung von einem Messsignal anhand FIG 2 näher erläutert. Im Beispielsfall wird der Kennwert des Messsignals sowohl auf das Überschreiten gewisser Schwellwerte 5a bis 5d als auch auf die Größe der Differenz der in zwei aufeinanderfolgenden Messperioden bestimmten Kennwerte überwacht. Im ersten Zeitabschnitt 10 des Diagramms 1 befinden sich die Kennwerte 4 des Messsignals unterhalb des ersten Schwellwerts 5a. Innerhalb des ersten Zeitabschnitts 10 ist dem Messsignal die gleiche Priorität P1...P15 zugeordnet, was sich darin bemerkbar macht, dass der zeitliche Abstand 9 innerhalb des ersten Zeitabschnitts 10 konstant ist. Der erste Kennwert 4 des Messsignals im zweiten Zeitabschnitt 11 befindet sich oberhalb des ersten Schwellwerts 5. Mit Überschreiten des ersten Schwellwerts 5a wird dem Messsignal eine höhere Priorität P1...P15 zugeordnet. Diese Stelle ist im Diagramm 1 mit dem Bezugszeichen 6a gekennzeichnet. Entsprechend der höheren Priorität P1...P15 wird dem Messsignal automatisch ein kleinerer zeitlicher Abstand zwischen den Messperioden zugewiesen. Im Beispielsfall hat sich der zeitliche Abstand während des zweiten Zeitabschnitts 11 im Vergleich zum zeitlichen Abstand während des vorhergehenden Zeitabschnitts 10 halbiert. Beim Überschreiten eines zweiten Schwellwerts 5b (siehe Stelle 6b im Diagramm 1) wird wiederum die Priorität P1...P15 heraufgesetzt und damit der zeitliche Abstand verkleinert (siehe dritter Zeitabschnitt 12). Im Beispielsfall wird jedoch auch die Differenz der in zwei aufeinanderfolgenden Messperioden 8 bestimmten Kennwerte 4 des Messsignals überwacht. Überschreitet diese Differenz einen gewissen vorher festgesetzten Wert, wird automatisch die Priorität P1...P15 erhöht. Bei dem im Diagramm 1 dargestellten Verlauf der Kennwerte des Messsignals ist eine Stelle solcher großen Wertedifferenz mit dem Bezugszeichen 7 gekennzeichnet. Für den Fall, dass dem Messsignal die höchste Priorität P1 zugeordnet wird, wird es kontinuierlich ausgewertet, so wie im vierten Zeitabschnitt 13 dargestellt. Der dargestellte Verlauf des Kennwerts unterschreitet zu Beginn des fünften Zeitabschnitts 14 wieder den obersten Schwellwert 5d und wird daraufhin einer geringeren Priorität P2 mit einem größeren zeitlichen Abstand zugeordnet. In FIG 2 nicht gezeigt wird die Möglichkeit, dass die Festlegung der Priorität P1...P15 automatisch in Abhängigkeit einer vom Rechnersystem durchgeführten Trendbetrachtung der in aufeinanderfolgenden Messperioden bestimmten Kennwerte des Messsignals erfolgt. Eine solche Trendbetrachtung kann z. B. die Auswertung des Messsignalverlaufs nach den Regeln der Fuzzy-Logik bedeuten. Aber auch langsamere Veränderungen des Messsignals, die sich durch eine einfache Schwellwertüberwachung der Kennwerte nicht erfassen lassen, sind mittels einer Trendbetrachtung erfassbar.

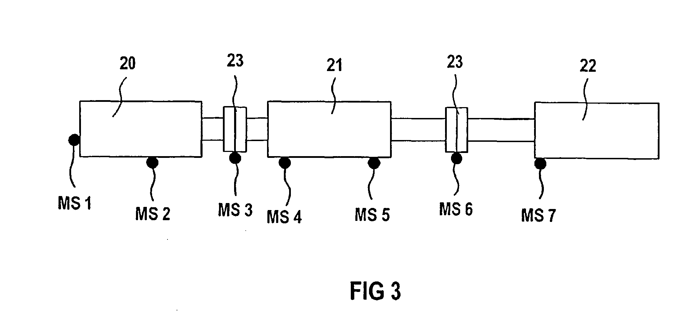

FIG 3 zeigt einen Antriebsstrang eines Walzgerüsts, bestehend aus einem Motor 20, einem Getriebe 21, einer Walze 22 und verbindenden Kupplungen 23. Zur Überwachung des Antriebsstrangs sind mehrere Messstellen vorgesehen, welche mit den Bezugszeichen MS1 bis MS7 bezeichnet sind. Jede Messstelle MS1...MS7 liefert Messsignale, welche mit dem beschriebenen Verfahren zur Überwachung von Messsignalen ausgewertet werden. Das vorgeschlagene Verfahren ist auch anwendbar auf die Schwingungsüberwachung an Schrotmühlen (Brauindustrie), im Fahrzeugbereich und bei Motorprüfständen. Neben diesen sind noch weitere Bereiche und Messgrößen (Strom, Kraft, Bild, usw.) denkbar. Das Verfahren ermöglicht es, auch mit gängiger Rechnerhardware komplexere Anlagen zu überwachen und im Falle eines sich anbahnenden Schadens die Messstelle mit der geforderten zeitlichen Auflösung auszuwerten.

Zusammenfassend betrifft die Erfindung somit ein Verfahren zur Überwachung von mindestens einem Messsignal, insbesondere zur Anwendung in der Automatisierungstechnik, in der Fertigungsautomatisierung sowie in der Prozessautomatisierung, welches Verfahren anhand eines Messsignalverlaufs automatisch einen optimalen zeitlichen Abstand von Messperioden bestimmt und einstellt. Dabei bestimmt ein Rechnersystem in Messperioden 8, welche einen zeitlichen Abstand 9 voneinander aufweisen, zyklisch einen Kennwert des Messsignals bestimmt, wobei automatisch eine Festlegung einer Priorität P1...P15 erfolgt, die Priorität P1...P15 dem Messsignal zugewiesen wird und der zeitliche Abstand 9 zwischen den Messperioden 8 in Abhängigkeit der Priorität P1...P15 festgelegt wird.

## Patentansprüche

1. Verfahren zur Überwachung von mindestens einem Messsignal, insbesondere zur Anwendung in der Automatisierungstechnik, bei welchem Verfahren ein Rechnersystem in Messperioden (8), welche einen zeitlichen Abstand (9) voneinander aufweisen, zyklisch einen Kennwert (4) des zumindest einen Messsignals bestimmt,
**dadurch gekennzeichnet,**
**dass** automatisch
- eine Festlegung zumindest einer Priorität (P1...P15) erfolgt,
- die zumindest eine Priorität (P1...P15) dem entsprechenden Messsignal zugewiesen wird und
- der zeitliche Abstand (9) zwischen den Messperioden (8) in Abhängigkeit der jeweiligen Priorität (P1...P15) festgelegt wird, wobei dem Messsignal eine Zuordnungstabelle, welche auf das Messsignal abgestimmt ist, zugeordnet wird, wobei in der Zuordnungstabelle der Priorität (P1...P15) der zeitliche Abstand zugeordnet wird.

2. Verfahren nach Anspruch 1,
**dadurch gekennzeichnet,**
**dass** die Festlegung der Priorität (P1...P15) automatisch in Abhängigkeit vom Kennwert (4) des Messsignals erfolgt.

3. Verfahren nach Anspruch 1 oder 2,
**dadurch gekennzeichnet,**
**dass** die Festlegung der Priorität (P1...P15) automatisch in Abhängigkeit der Größe der Differenz der in zwei aufeinanderfolgenden Messperioden (8) bestimmten Kennwerte (4) des Messsignals erfolgt.

4. Verfahren nach einem der vorhergehenden Ansprüche,
**dadurch gekennzeichnet,**
**dass** die Festlegung der Priorität (P1...P15) automatisch in Abhängigkeit einer vom Rechnersystem durchgeführten Trendbetrachtung der in aufeinanderfolgenden Messperioden (8) bestimmten Kennwerte (4) des Messsignals erfolgt.

5. Verfahren nach einem der vorhergehenden Ansprüche,
**dadurch gekennzeichnet,**
**dass** die Messperioden (8) als diskrete Abtastzeitpunkte und die Kennwerte (4) des Messsignals als Momentanwerte des Messsignals ausgebildet sind.

## Claims

1. Method for monitoring at least one measuring signal, in particular for use in automation technology, in which method a computer system cyclically determines a characteristic value (4) of the at least one measuring signal in measuring periods (8) which are separated from one another by a time interval (9),
**characterised in that**
- at least one priority (P1...P15) is defined automatically,
- the at least one priority (P1...P15) is assigned to the measuring signal and
- the time interval (9) between the measuring periods (8) is specified as a function of the respective priority (P1...P15), with an assignment table, which is attuned to the measuring signal, being assigned to the measuring signal, with the time interval being assigned to the priority (P1...P15) in the assignment table.

2. Method according to claim 1,
**characterised in that**
the priority (P1...P15) is defined automatically as a function of the characteristic value (4) of the measuring signal.

3. Method according to claim 1 or 2,
**characterised in that**
the priority (P1...P15) is defined automatically as a function of the size of the difference in the characteristic values (4) of the measuring signal which were determined in two successive measuring periods (8).

4. Method according to one of the preceding claims,
**characterised in that**
the priority (P1...P15) is defined automatically as a function of a trend analysis performed by the computer system of the characteristic values (4) of the measuring signal which were determined in successive measuring periods (8).

5. Method according to one of the preceding claims,
**characterised in that**
the measuring periods (8) are embodied as discrete sampling instants and the characteristic values (4) of the measuring signal are embodied as momentary values of the measuring signal.

## Revendications

1. Procédé de contrôle d'au moins un signal de mesure s'appliquant notamment dans la technique d'automatisation, procédé dans lequel un système informatique détermine, dans des périodes ( 8 ) de mesure qui ont une distance ( 9 ) dans le temps différente l'une de l'autre, cycliquement une valeur ( 4 ) caractéristique du au moins un signal de mesure,
**caractérisé**
**en ce qu'**automatiquement
- on effectue une fixation d'au moins une priorité ( P1.... . 15),
- on affecte la au moins une priorité ( P1......P15) au signal de mesure correspondant et
- on fixe la distance ( 9 ) dans le temps entre les périodes ( 8 ) de mesure en fonction de la priorité ( P1......P15 ) respective, une table d'affectation, qui est adaptée au signal de mesure, étant affectée au signal de mesure, dans lequel dans la table d'affectation la distance dans le temps est affectée à la priorité ( P1....... P15).

2. Procédé suivant la revendication 1, **caractérisé en ce que** l'on effectue la fixation de la priorité ( P1.....P15) automatiquement en fonction de la valeur ( 4 ) caractéristique du signal de mesure.

3. Procédé suivant la revendication 1 ou 2, **caractérisé en ce que** l'on effectue la fixation de la priorité ( P1....... P15 ) automatiquement en fonction de la grandeur de la différence des valeurs ( 4 ) caractéristiques du signal de mesure déterminées dans deux périodes ( 8 ) de mesure se succédant.

4. Procédé suivant l'une des revendications précédentes, **caractérisé en ce que** l'on effectue la fixation des priorités ( P1..... . . P15 ) automatiquement en fonction d'une considération de tendance, effectuée par le système informatique, des valeurs ( 4 ) caractéristiques du signal de mesure déterminées dans des périodes ( 8 ) de mesure se succédant.

5. Procédé suivant l'une des revendications précédentes, **caractérisé en ce que** l'on forme les périodes ( 8 ) de mesure en tant qu'instants d'étalonnage discrets et les valeurs ( 4 ) caractéristiques du signal de mesure en tant que valeurs instantanées du signal de mesure.
